(19) Europäisches Patentamt
European Patent Office
Office européen des brevets

(11) EP 0 547 521 B1

(12) EUROPÄISCHE PATENTSCHRIFT

(45) Veröffentlichungstag und Bekanntmachung des Hinweises auf die Patenterteilung:
12.03.1997 Patentblatt 1997/11

(51) Int Cl.6: **C08J 11/04**, C08J 11/06, C02F 9/00, C02F 1/66, C02F 1/54 // C08L29/04

(21) Anmeldenummer: 92121141.3

(22) Anmeldetag: 11.12.1992

(54) **Verfahren zur Fällung wässriger, polyvinylalkoholhaltiger Kunststoffdispersionen**

Process for the precipitation of aqueous polymer dispersions containing polyvinylalcohol

Procédé pour la précipitation des dispersions polymères aqueuses contenant un alcool polyvinylique

(84) Benannte Vertragsstaaten:
AT BE CH DE DK ES FR GB GR IT LI NL PT SE

(30) Priorität: 18.12.1991 DE 4141777

(43) Veröffentlichungstag der Anmeldung:
23.06.1993 Patentblatt 1993/25

(73) Patentinhaber: HOECHST AKTIENGESELLSCHAFT
65926 Frankfurt am Main (DE)

(72) Erfinder: Matz, Volker, Dr.
W-6000 Frankfurt/Main 71 (DE)

(56) Entgegenhaltungen:
EP-A- 0 376 605          US-A- 5 026 485

• DATABASE WPI Derwent Publications Ltd., London, GB; AN 7785749Y(48)
• DATABASE WPI Derwent Publications Ltd., London, GB; AN 7713589Y(08)

**Beschreibung**

Die Erfindung betrifft ein Verfahren, mit dem aus wäßrigen, polyvinylalkoholhaltigen Kunststoffdispersionen sowohl der Polyvinylalkohol (PVAL) als auch das polymere Dispergens in einem einzigen Arbeitsgang gefällt werden können.

Polymerisatdispersionen, die PVAL sowie gegebenenfalls auch Celluloseäther als Schutzkolloid enthalten, können außerordentlich stabile disperse Systeme bilden, die in biologischen Kläranlagen bekanntlich schwer abbaubar sind. Gesetzliche Auflagen schreiben in der Bundesrepublik Deutschland vor, daß solche Dispersionen nicht über das Abwasser entsorgt werden dürfen. Es ist daher notwendig, die Dispersionen in geeigneter Weise, z. B. auf chemisch-physikalischem Weg, zu koagulieren, und die störenden organischen Verbindungen vorzugsweise in fester Form auszufällen und aus der wäßrigen Phase zu entfernen.

In CA 103(24):200429d wird ein Verfahren gemäß JP-OS 85-150880 zur Reinigung latexhaltiger Abwässer durch Fällung des Latex mit Eisen(III)- und Erdalkalisalzen beschrieben. Diese Methode ist jedoch bei PVAL-stabilisierten Kunststoffdispersionen nicht ohne weiteres zufriedenstellend anwendbar.

Das Abtrennen von PVAL aus wäßrigen Lösungen kann nach verschiedenen Methoden erfolgen. So wird in der US-PS 4166033 sowohl das Ausfällen von PVAL mittels Eisen- oder Aluminiumsalzen als auch die Bildung eines PVAL-Borsäure-Komplexes und dessen Fällung als schwerlösliches Calciumsalz beschrieben. In der JP-OS 77-141060 ist ein Verfahren beschrieben, bei dem die Fällung von PVAL bei pH-Werten über 8 durch Zusatz wasserlöslicher Borate und Sulfate erfolgt. Im Falle von Dispersionen ist aber auf diesem Weg nur eine unvollständige Mitfällung des dispergierten Kunststoffs zu erzielen. Ist der PVAL schon bei der Herstellung der Dispersion während der Polymerisationsreaktion z. B. als Schutzkolloid zugegen, so entstehen häufig auch Pfropfpolymerisate mit PVAL als Pfropfgrundlage, die nach den obigen Methoden der PVAL-Fällung im allgemeinen nicht fällbar sind.

Ein ähnliches Verfahren wird in der US-5 026 485 offenbart.

Der vorliegenden Erfindung lag somit die Aufgabe zugrunde, eine Methode zu entwickeln, durch die aus PVAL-haltigen wäßrigen Kunststoffdispersionen sowohl der PVAL als auch das gesamte Dispergens vollständig und in einem einzigen Arbeitsgang ausgefällt werden können. Diese Aufgabe kann erfindungsgemäß dadurch gelöst werden, daß man der Dispersion in folgender Reihenfolge unter guter Durchmischung zunächst Borsäure oder eine Borsäureverbindung, danach eine basische Verbindung, anschließend ein wasserlösliches Eisensalz und danach einen kationischen Polyelektrolyten zusetzt. Nach Zugabe des Eisensalzes setzt die Ausfällung der dispergierten organischen Verbindungen ein, die sich nach dem Vermischen mit dem kationischen Polyelektrolyten in gut filtrierbarer fester Form vollständig abscheiden und zur weiteren Verwertung oder Entsorgung leicht abgetrennt werden können.

Gegenstand der Erfindung ist daher ein Verfahren zur Fällung wäßriger, polyvinylalkoholhaltiger Kunststoffdispersionen und Abtrennung des polymeren Feststoffgehalts, dadurch gekennzeichnet, daß der Dispersion unter guter Durchmischung in nachstehender Reihenfolge

a) eine Borsäurekomponente,
b) eine basische Verbindung zur Einstellung eines alkalischen pH-Wertes, danach
c) ein Eisensalz und
d) ein kationischer Polyelektrolyt zugesetzt, der sich im alkalischen Milieu bildende Niederschlag durch Rühren zerteilt, danach der Rührer abgestellt, der Niederschlag sich absetzen lassen und das Sediment isoliert wird.

Nach dieser Methode kann eine praktisch vollständige Fällung des gesamten PVAL-s und der dispergierten organischen Verbindungen erreicht werden. Der chemische Sauerstoffbedarf (CSB) des nach der Fällung resultierenden Filtrats beträgt weniger als 5 % des Bedarfs der Ausgangsdispersion, was einem Klärgrad der wäßrigen Phase von über 95 % entspricht. Ein weiteres Abwasserkriterium stellt der Anteil des darin gelösten organisch gebundenen Kohlenstoffs (DOC) dar. Auch hier kann eine Reduktion des DOC-Wertes von über 95 % gegenüber der Ausgangsdispersion erzielt werden. Ferner ist der biologische Sauerstoffbedarf ($BSB_5$) des Filtrats gegenüber der Ausgangsdispersion um über 80 % verringert.

Der Quotient aus den Analysenwerten des biologischen und des chemischen Sauerstoffbedarfs ($BSB_5$/CSB), der im allgemeinen kleiner als 1 ist, theoretisch maximal den Wert 1 annehmen kann und für gut biologisch abbaubare Verbindungen 0,7 beträgt, stellt bekanntlich ein Maß für die biologische Abbaubarkeit der in Abwässern enthaltenen Verunreinigungen dar. Je näher der Wert bei 0,7 liegt, desto vollständiger können die Verunreinigungen durch einen biologischen Klärprozeß eliminiert werden. Überraschenderweise hat sich nun gezeigt, daß das erfindungsgemäße Verfahren eine deutliche Erhöhung dieses Abwasserkennwertes, z. B. um das Vierfache bei einem erfindungsgemäßen Filtrat vergleichsweise zu der Ausgangsdispersion, ermöglicht.

Dies bedeutet, daß die ohnehin bereits nur noch geringe Restverschmutzung in dem erfindungsgemäß gefällten und filtrierten Abwasser in einer biologischen Kläranlage auch noch wesentlich vollständiger abbaubar ist, vergleichsweise zu Abwasser mit der Ausgangsdispersion. Überraschend ist hierbei außerdem, daß die verbesserte biologische Abbaufähigkeit in dem nach der erfindungsgemäßen Fällung und Filtration erhaltenen Abwasser trotz der Verwendung einer an sich bioziden Borsäureverbindung als Fällungskomponente erzielt werden kann.

Das erfindungsgemäße Verfahren dient zum abwassergerechten Aufarbeiten von Dispersionen, insbesondere von sorgungspflichtigen dispersionshaltigen Abwässern, die bevorzugt 0,1 bis 10 Gew.-%, besonders bevorzugt 0,2 bis 2 Gew.-%, Dispergens, vorzugsweise organisches Dispergens, enthalten. Als Dispergens kommen bevorzugt nylesterpolymerisate, insbesondere Polyvinylacetat oder Polyvinylpropionat oder Vinylestercopolymerisate, insbesondere Vinylacetat/Ethylen-Copolymerisate, in Betracht. In PVAL-stabilisierten Polymerisatdispersionen beträgt der PVAL- Anteil vorzugsweise 1 bis 12 Gew.-%, insbesondere 3 bis 10 Gew.-%, bezogen auf das organische Dispergens. Dabei stellen das Molgewicht und/oder der Verseifungsgrad des PVAL-s im allgemeinen keine kritischen Größen dar, jedoch werden in Kunststoffdispersionen als Schutzkolloid bekanntlich bevorzugt teilverseifte PVAL-e verwendet.

Als Borsäurekomponente werden bevorzugt Borsäure und Borate, wie z. B. Borax oder Alkaliborate verwendet. Vorzugsweise werden 2 bis 20 Gew.-%, insbesondere 5 bis 10 Gew.-%, Borsäurekomponente, bezogen auf die Feststoffmenge der zur Fällung zu bringenden Dispersion, eingesetzt. Die Borsäurekomponente wird vorzugsweise als wäßrige Lösung verwendet.

Als basische Verbindungen dienen bevorzugt anorganische basische Verbindungen, insbesondere Alkali- und Erdalkalihydroxide. Diese werden bevorzugt in Form wäßriger Lösungen eingesetzt. Besonders bevorzugt ist die Verwendung einer 20 gew.-%igen wäßrigen Suspension von Calciumhydroxid (Kalkmilch).

Als wasserlösliche Eisensalze werden vorzugsweise Eisen(III)salze und Eisen(II)verbindungen verwendet, insbesondere Eisen(III)chlorid, Eisen(III)sulfat, Eisen(II)sulfat, Eisen(II)chlorid. Die Salze werden vorzugsweise als wäßrige Lösungen eingesetzt. Die Menge des eingesetzten Fe-Salzes beträgt vorzugsweise 2 bis 20 Gew.-%, insbesondere 5 bis 10 Gew.-%, bezogen auf die Feststoffmenge in der zur Fällung zu bringenden Dispersion.

Erfindungsgemäß ist zur vollständigen Ausfällung der zu eliminierenden Dispersionsbestandteile in einer sich gut ausscheidenden und gut filtrierbaren festen Form der Zusatz eines kationischen Polyelektrolyten erforderlich. Als kationsche Polyelektrolyte kommen erfindungsgemäß vorzugsweise kationische Polymerisate infrage. Besonders bevorzugt ist die Verwendung von Polydiallyldimethylammoniumchlorid (Poly-DADMAC). Vorzugsweise werden für die Fällung 0,1 bis 3 Gew.-%, insbesondere 1 bis 2 Gew.-%, kationischer Polyelektrolyt, bezogen auf die Feststoffmenge in der zur Fällung zu bringenden Dispersion, verwendet. Der Polyelektrolyt wird vorzugsweise als wäßrige Lösung eingesetzt.

Erfindungsgemäß beträgt bei den zu verwendenden Fällungsreagenzien das Gewichtsverhältnis von Borsäurekomponente zu Eisensalz vorzugsweise 10 : 1 bis 1 : 10. Ferner beträgt das Gewichtsverhältnis der Mengensumme von Borsäurekomponente + Eisensalz zu kationischem Polyelektrolyt vorzugsweise 1 : 0,5 bis 1 : 0,05, insbesondere 1 : 0,1.

Das erfindungsgemäße Verfahren kann vorteilhaft in allen einschlägigen Bereichen der Technik und der Abwasseraufbereitung Anwendung finden, in denen PVAL-haltige Polymerisatdispersionen verwendet werden oder zu entsorgen sind und dabei Abwässer aufzuarbeiten sind, die PVAL-haltige Dispersionen enthalten.

Die Erfindung wird durch die nachfolgenden Beispiele näher erläutert.

## BEISPIELE

### Allgemeine Arbeitsvorschrift zur Dispersionsfällung

Die zu fällende Dispersion wird unter Rühren mit der Borsäurekomponente versetzt. Durch Zugabe von Base wird danach ein pH-Wert von 12,3 eingestellt. Bei diesem pH-Wert tritt eine teilweise Koagulation der Dispersion ein. Unter Rühren (200 Upm, Flügelrührer) wird eine Eisensalzlösung langsam zudosiert, wobei der pH-Wert nicht unter 9,5 absinken darf. Gegebenenfalls wird der pH-Wert durch weitere Basenzugabe nachgestellt. Anschließend wird der kationische Polyelektrolyt zudosiert. Der sich dabei zunächst bildende dickflockige Niederschlag wird durch weiteres, etwa 10-minütiges, kräftiges Rühren solchermaßen zerteilt, daß ein mittelflockiger Niederschlag erhalten wird, der eine optimale Fällung ermöglicht und nach Abstellen des Rührwerks rasch sedimentiert. Man erhält ein klares Dekantat und der Niederschlag läßt sich über ein Papierfilter gut in fester Form abtrennen und kann, ebenso wie das Dekantat und das Filtrat, der weiteren Entsorgung zugeführt werden. Der Niederschlag kann vorzugsweise auch durch Zentrifugieren abgetrennt und in fester Form gewonnen werden. Im Fall von höherkonzentrierten Dispersionen werden diese, vorzugsweise vor der Fällungsbehandlung, gegebenenfalls mit Wasser verdünnt.

### Beispiel 1

10 l einer 2 gew.-%igen Polyvinylacetat(PVAc)-Dispersion (Feststoffgehalt 200 g), stabilisiert mit 5 Gew.-% Polyvinylalkohol, bezogen auf das Dispergens, werden mit 300 g 3 gew.-%iger wäßriger Borsäurelösung vermischt. Durch Zugabe der erforderlichen Menge 20 gew.-%iger wäßriger Calciumhydroxidsuspension, im folgenden Kalkmilch genannt, wird ein pH-Wert von 12,3 eingestellt. Unter Rühren (200 Upm, Flügelrührer) werden 100 g einer 20 gew.-%igen wäßrigen Eisen(III)sulfat-Lösung so zudosiert, daß der pH-Wert nicht unter 9,5 abfällt. Gegebenenfalls wird der pH-Wert durch Zugabe von weiterer Kalkmilch nachgestellt. Anschließend werden 10 ml einer 10 gew.-%igen wäßrigen Poly-DADMAC-Lösung zugesetzt. Der sich dabei bildende dickflockige Niederschlag wird durch weiteres etwa 10-minütiges Rühren zerteilt, danach wird der Rührer abgeschaltet und die Mischung sich absetzen lassen. Nach der Sedimentation wird ein klares Dekantat erhalten. Der Niederschlag wird über ein Papierfilter filtriert und isoliert. Das Filtrat wird mit dem Dekantat vereinigt und nachfolgend als Filtrat bezeichnet. Der Klärgrad der Fällung, der nach der Formel

$$[100 - \frac{CSB\ (Filtrat)}{CSB\ (Ausgangsdispersion)} \times 100\ (= \%)]$$

errechnet wird, beträgt 97 %.

Die nach üblichen Methoden durchgeführten Abwasseranalysen von Ausgangsdispersion und Filtrat ergeben folgende Werte:

| | CSB mg $O_2$/l | $BSB_5$ mg $O_2$/l | $BSB_5$/CSB | DOC mg C/l |
|---|---|---|---|---|
| 2 gew.-%ige PVAc-Dispersion | 32400 | | | 11200 |
| Filtrat aus Beispiel 1 | 850 | | | 345 |

**Beispiel 2**

10 l einer 2 gew.-%igen Polyvinylacetat(PVAc)-Dispersion (Feststoffgehalt 200 g), stabilisiert mit 10 Gew.-% Polyvinylalkohol, bezogen auf das Dispergens, werden mit 700 g 3 gew.-%iger wäßriger Borsäurelösung vermischt. Durch Zugabe von Kalkmilch wird ein pH-Wert von 12,3 eingestellt. Unter Rühren (200 Upm, Flügelrührer) werden 100 g einer 20 gew.-%igen wäßrigen Eisen(III)chlorid-Lösung so zudosiert, daß der pH-Wert nicht unter 9,5 abfällt. Gegebenenfalls wird der pH-Wert durch weiteren Kalkmilchzusatz nachgestellt. Anschließend werden 25 ml einer 10 gew.-%igen wäßrigen Poly-DADMAC-Lösung zugesetzt. Der sich dabei bildende dickflockige Niederschlag wird durch kräftiges, etwa 10-minütiges Rühren zerteilt, danach der Rührer abgeschaltet und die Mischung sich absetzen lassen. Nach der Sedimentation wird ein klares Dekantat erhalten. Der Niederschlag wird über ein Papierfilter filtriert und isoliert. Dekantat und Filtrat werden vereinigt und nachfolgend als Filtrat bezeichnet. Der Klärgrad der Fällung beträgt 97 %. Die analog Beispiel 1 durchgeführten Analysen der Ausgangsdispersion und des Filtrats ergeben folgende Werte:

| | CSB mg $O_2$/l | $BSB_5$ mg $O_2$/l | $BSB_5$/CSB | DOC mg C/l |
|---|---|---|---|---|
| 2 gew.-%ige PVAc-Dispersion | 32400 | 475 | $1 \cdot 10^{-2}$ | 10540 |
| Filtrat | 820 | 50 | $6 \cdot 10^{-2}$ | 526 |

**Beispiel 3**

10 l einer 2 gew.-%igen Polyvinylacetat(PVAc)-Dispersion, hergestellt durch Verdünnung einer handelsüblichen PVAc-Dispersion mit entsalztem Wasser, (Feststoffgehalt 200 g), stabilisiert mit 6 Gew.-% Polyvinylalkohol, bezogen auf das Dispergens, werden mit 400 g 3 gew.-%iger wäßriger Borsäurelösung vermischt. Durch Zugabe von Kalkmilch wird ein pH-Wert von 12,3 eingestellt. Unter Rühren (200 Upm, Flügelrührer) werden 50 g einer 20 gew.-%igen wäßrigen Eisen(III)sulfat-Lösung so zudosiert, daß der pH-Wert nicht unter 9,5 abfällt. Gegebenenfalls wird der pH-Wert durch Zugabe von weiterer Kalkmilch nachgestellt. Anschließend werden 10 ml einer 10 gew.-%igen wäßrigen Poly-DADMAC-Lösung zugesetzt. Der sich dabei bildende dickflockige Niederschlag wird durch kräftiges, etwa 10-minütiges Rühren zerteilt, danach das Rührwerk abgestellt und die Mischung sich absetzen lassen. Nach der Sedimentation wird ein klares Dekantat erhalten. Der Niederschlag wird über ein Papierfilter filtriert und isoliert. Dekantat und Filtrat werden vereinigt und nachfolgend als Filtrat bezeichnet.

Der Klärgrad der Fällung beträgt 97 %.

**Beispiel 4**

Beispiel 3 wird wiederholt mit der Abänderung, daß anstelle von 100 g 20 gew.-%iger wäßriger Eisen(III)sulfat-Lösung 50 g einer 20 gew.-%igen wäßrigen Eisen(III)chlorid-Lösung zugesetzt werden.

Der Klärgrad der Fällung beträgt 96 %.

**Beispiel 5**

Beispiel 3 wird wiederholt mit der Abänderung, daß anstelle von 100 g 20 gew.-%iger wäßriger Eisen(III)sulfat-Lösung 50 g einer 10 gew.-%igen wäßrigen Eisen(II)sulfat-Lösung eingesetzt werden.

Der Klärgard beträgt 98 %.

Die Abwasseranalysen aus den Beispielen 3 bis 5 ergeben folgende Resultate:

| | CSB mg $O_2$/l | BSB$_5$ mg $O_2$/l | BSB$_5$/CSB | DOC mg C/l |
|---|---|---|---|---|
| Handelsübliche PVAL-stabilisierte PVAc-Dispersion, verdünnt auf 2 Gew.-% Feststoffgehalt | 35000 | 2000 | $6 \cdot 10^{-2}$ | 10975 |
| Filtrat aus Beispiel 3 | 920 | 330 | $36 \cdot 10^{-2}$ | 296 |
| Filtrat aus Beispiel 4 | 810 | 200 | $25 \cdot 10^{-2}$ | 346 |
| Filtrat aus Beispiel 5 | 1210 | 315 | $26 \cdot 10^{-2}$ | 386 |

**Beispiel 6**

1 l einer 0,2 gew.-%igen Polyvinylacetat(PVAc)-Dispersion (Feststoffgehalt 2 g), stabilisiert mit 8 Gew.-% Polyvinylalkohol, bezogen auf das Dispergens, wird mit 4 g 3 gew.-%iger wäßriger Borsäurelösung vermischt. Durch Zugabe von Kalkmilch wird ein pH-Wert von 12,3 eingestellt. Unter Rühren (200 Upm, Flügelrührer) werden 1 g einer 20 gew.-%igen wäßrigen Eisen(III)sulfat-Lösung so zudosiert, daß der pH-Wert nicht unter 9,5 abfällt. Gegebenenfalls wird der pH-Wert durch weiteren Kalkmilchzusatz nachgestellt. Anschließend werden 0,1 ml einer 10 gew.-%igen wäßrigen Poly-DADMAC-Lösung zugesetzt und 10 Minuten gerührt. Der sich dabei bildende Niederschlag sedimentiert nach Abstellen des Rührers langsam und es wird ein klares Dekantat erhalten.

Der Klärgrad der Fällung beträgt 98 %.

**Beispiel 7**

2 l einer 10 gew.-%igen Polyvinylacetat(PVAc)-Dispersion (Feststoffgehalt 200 g), stabilisiert mit 10 Gew.-% Polyvinylalkohol, bezogen auf das Dispergens, werden mit 600 g 3 gew.-%iger wäßriger Borsäurelösung vermischt. Durch Zugabe von Kalkmilch wird ein pH-Wert von 12,3 eingestellt. Unter Rühren (200 Upm, Flügelrührer) werden 40 g einer 20 gew.-%igen wäßrigen Eisen(III)sulfat-Lösung so zudosiert, daß der pH-Wert nicht unter 9,5 abfällt. Gegebenenfalls wird der pH-Wert durch weiteren Kalkmilchzusatz nachgestellt. Anschließend werden 8 ml einer 10 gew.-%igen wäßrigen Poly-DADMAC-Lösung zugesetzt und 10 Minuten kräftig gerührt. Das sich bildende Gel setzt sich nur langsam ab. Einen gut absetzenden flockigen festen Niederschlag erhält man jedoch nach 5-facher Verdünnung des Fällungsgemisches mit Wasser und anschließendem nochmaligem kräftigem 10-minütigem Rühren. Der Klärgrad bei der letzteren 5-fach verdünnten Variante beträgt 98 %

**Beispiel 8**

10 l einer 2 gew.-%igen Vinylacetat/Ethylen-Copolymerisat-Dispersion (Feststoffgehalt 200 g), stabilisiert mit 6 Gew.-% Polyvinylalkohol, bezogen auf das Dispergens, werden mit 600 g 3 gew.-%iger wäßriger Borsäurelösung vermischt. Durch Zugabe von Kalkmilch wird ein pH-Wert von 12,3 eingestellt. Unter Rühren (200 Upm, Flügelrührer) werden 100 g einer 20 gew.-%igen wäßrigen Eisen(III)chlorid-Lösung so zudosiert, daß der pH-Wert nicht unter 9,5 abfällt. Gegebenenfalls wird der pH-Wert durch weiteren Kalkmilchzusatz nachgestellt. Anschließend werden 20 ml einer 10 gew.-%igen wäßrigen Poly-DADMAC-Lösung zugesetzt. Der sich dabei bildende dickflockige Niederschlag wird durch kräftiges, etwa 10-minütiges Rühren zerteilt, danach der Rührer abgeschaltet und die Mischung sich absetzen lassen. Nach der Sedimentation wird ein klares Dekantat erhalten. Der Niederschlag wird über ein Papierfilter filtriert und isoliert.
Der Klärgrad der Fällung beträgt 97 %.

**Patentansprüche**

1.  Verfahren zur Fällung wäßriger, polyvinylalkoholhaltiger Kunststoffdispersionen und Abtrennung des polymeren Feststoffgehalts, dadurch gekennzeichnet, daß der Dispersion unter guter Durchmischung in nachstehender Reihenfolge

    a) eine Borsäurekomponente,
    b) eine basische Verbindung zur Einstellung eines alkalischen pH-Wertes, danach
    c) ein Eisensalz und
    d) ein kationischer Polyelektrolyt

    zugesetzt, der sich im alkalischen Milieu bildende Niederschlag durch Rühren zerteilt, danach der Rührer abgestellt, der Niederschlag sich absetzen lassen und das Sediment isoliert wird.

2.  Verfahren nach Anspruch 1, dadurch gekennzeichnet, daß die Feststoffkonzentration der zu fällenden Dispersion 0,1 bis 10 Gew.-%, vorzugsweise 0,2 bis 2 Gew.-%, bezogen auf die Dispersion, beträgt.

3.  Verfahren nach Anspruch 1 oder 2, dadurch gekennzeichnet, daß die Dispersion als Dispergens ein Vinylesterpolymerisat oder Vinylestercopolymerisat, vorzugsweise Polyvinylacetat oder Polyvinylpropionat oder ein Vinylacetat/Ethylen-Copolymerisat, enthält.

4.  Verfahren nach einem oder mehreren der Ansprüche 1 bis 3, dadurch gekennzeichnet, daß der pH-Wert der Dispersion, nach Zugabe der basischen Verbindung b), zwischen 9,5 und 13, vorzugsweise bei 12,3 , liegt.

5.  Verfahren nach einem oder mehreren der Ansprüche 1 bis 4, dadurch gekennzeichnet, daß das Gewichtsverhältnis der Borsäurekomponente a) zum Eisensalz c) 10 : 1 bis 1 : 10 und das Gewichtsverhältnis der Mengensumme aus Borsäurekomponente a) + Eisensalz c) zum kationischen Polyelektrolyten d) 1 : 0,5 bis 1 : 0,05, vorzugsweise 1 : 0,1 , beträgt.

6.  Verfahren nach einem oder mehreren der Ansprüche 1 bis 5, dadurch gekennzeichnet, daß die zur Fällung der Dispersion verwendeten Komponenten a), c) und d) der zu fällenden Dispersion in den Mengen

    a) Borsäurekomponente 2 bis 20 Gew.-%, vorzugsweise 5 bis 10 Gew.-%,
    c) Eisensalz 2 bis 20 Gew.-%, vorzugsweise 5 bis 10 Gew.-%, und
    d) kationischer Polyelektrolyt 0,1 bis 3 Gew.-%, vorzugsweise 1 bis 2 Gew.-%,

    jeweils bezogen auf den zu fällenden Feststoffgehalt der Dispersion, zugesetzt werden.

7.  Verfahren nach einem oder mehreren der Ansprüche 1 bis 6, dadurch gekennzeichnet, daß als Fällungskomponente a) Borsäure, als basische Verbindung b) Calciumhydroxid, als Fällungskomponente c) Eisen(III)chlorid, Eisen(III)sulfat oder Eisen(II)sulfat und als kationischer Polyelektrolyt d) Poly-diallyldimethylammoniumchlorid, jeweils vorzugsweise als wäßrige Lösung bzw. Suspension, verwendet werden.

## Claims

1. A process for the precipitation of aqueous plastics dispersions containing polyvinyl alcohol and separation of the polymeric solids content, which comprises adding the following to the dispersion in order, with thorough mixing:

   a) a boric acid component,
   b) a basic compound for making the pH alkaline, then
   c) an iron salt and
   d) a cationic polyelectrolyte,

   dispersing the precipitate which forms in the alkaline medium, by stirring, then stopping the stirrer, leaving the precipitate to settle out and isolating the sediment.

2. The process as claimed in claim 1, wherein the solids concentration of the dispersion to be precipitated is 0.1 to 10% by weight, preferably 0.2 to 2% by weight, based on the dispersion.

3. The process as claimed in claim 1 or 2, wherein the dispersion contains a vinyl ester polymer or vinyl ester copolymer, preferably polyvinyl acetate or polyvinyl propionate or a vinyl acetate/ethylene copolymer, as a dispersant.

4. The process as claimed in one or more of claims 1 to 3, wherein the pH of the dispersion after the addition of the basic compound b) is between 9.5 and 13, and preferably is about 12.3.

5. The process as claimed in one or more of claims 1 to 4, wherein the weight ratio of the boric acid component a) to the iron salt c) is 10:1 to 1:10 and the weight ratio of the sum of the amounts of boric acid component a) and iron salt c) to the cationic polyelectrolyte d) is 1:0.5 to 1:0.05, preferably 1:0.1.

6. The process as claimed in one or more of claims 1 to 5, wherein the components a), c) and d) used for precipitation of the dispersion, are added in the following amounts to the dispersion to be precipitated:

   a) boric acid component: 2 to 20% by weight, preferably 5 to 10% by weight,
   c) iron salt: 2 to 20% by weight, preferably 5 to 10% by weight, and
   d) cationic polyelectrolyte: 0.1 to 3% by weight, preferably 1 to 2% by weight,

   based in each case on the solids content of the dispersion to be precipitated.

7. The process as claimed in one or more of claims 1 to 6, wherein boric acid is used as the precipitating component a), calcium hydroxide is used as the basic compound b), iron(III) chloride, iron(III) sulfate or iron(II) sulfate is used as the precipitating component c) and polydiallyldimethylammonium chloride is used as the cationic polyelectrolyte d), in each case preferably as an aqueous solution or suspension.

## Revendications

1. Procédé pour précipiter des dispersions plastiques aqueuses, contenant du poly(alcool vinylique) et pour séparer l'extrait sec polymère, caractérisé en ce qu'on ajoute à la dispersion, en mélangeant convenablement, et dans l'ordre suivant :

   a) un constituant acide borique,
   b) un composé basique pour ajuster son pH à une valeur alcaline, puis
   c) un sel de fer et
   d) un polyélectrolyte cationique,

   le dépôt qui se forme dans le milieu alcalin se divise par agitation, puis on coupe l'agitateur, on laisse le dépôt se déposer et on isole le sédiment.

2. Procédé selon la revendication 1, caractérisé en ce que la teneur en extrait sec de la dispersion à précipiter est de 0,1 à 10 % en poids et de préférence de 0,2 à 2 % en poids par rapport à la dispersion.

3. Procédé selon la revendication 1 ou 2, caractérisé en ce que la dispersion contient en tant que dispersant un polymère d'un ester vinylique ou un copolymère d'un ester vinylique, de préférence du poly(acétate de vinyle) ou du poly(propionate de vinyle) ou un copolymère acétate de vinyle/éthylène.

4. Procédé selon l'une ou plusieurs des revendications 1 à 3, caractérisé en ce que le pH de la dispersion, après addition du composé basique b), est compris entre 9,5 et 13 et est de préférence de 12,3.

5. Procédé selon l'une ou plusieurs des revendications 1 à 4, caractérisé en ce que le rapport en poids du constituant acide borique a) au sel de fer c) est de 10:1 à 1:10 et que le rapport en poids de la somme des quantités du constituant acide borique a) et du sel de fer c) au polyélectrolyte cationique d) est de 1:0,5 à 1:0,05 et de préférence de 1:0,1.

6. Procédé selon l'une ou plusieurs des revendications 1 à 5, caractérisé en ce que les constituants a), c) et d), utilisés pour précipiter la dispersion, sont ajoutés à la dispersion à précipiter en les quantités suivantes, dans tous les cas par rapport à l'extrait sec à précipiter de la dispersion :

   a) constituant acide borique, de 2 à 20 % en poids et de préférence de 5 à 10 %,
   c) sel de fer, de 2 à 20 % en poids et de préférence de 5 à 10 % en poids, et
   d) polyélectrolyte cationique de 0,1 à 3 % en poids et de préférence de 1 à 2 % en poids.

7. Procédé selon l'une ou plusieurs des revendications 1 à 6, caractérisé en ce qu'on utilise comme constituant de précipitation a) l'acide borique, comme composé basique b) l'hydroxyde de calcium, comme constituant de précipitation c) le chlorure de fer(III), le sulfate de fer(III) ou le sulfate de fer(II), et comme polyélectrolyte cationique d) le poly(chlorure de di-allyldiméthylammonium), dans tous les cas de préférence sous forme d'une solution ou d'une suspension aqueuse.